# NEW EUROPEAN PATENT SPECIFICATION

(11) **EP 1 127 090 B2**
(45) Date of publication and mention of the opposition decision: **27.09.2006**
(45) Mention of the grant of the patent: 09.04.2003
(21) Application number: 99946766.5
(22) Date of filing: 07.09.1999
(51) Int. Cl.: C08L 101/00

(54) **THERMOPLASTIC ARTICLE HAVING LOW CLARITY AND LOW HAZE**
THERMOPLASTISCHES ERZEUGNIS MIT GERINGER DURCHSICHTIGKEIT UND GERINGER TRÜBUNG
ARTICLE THERMOPLASTIQUE A FAIBLE TRANSPARENCE ET VOILE FAIBLE

(30) Priority: 06.11.1998 US 187637
(43) Date of publication of application: 29.08.2001
(73) Proprietor: GENERAL ELECTRIC COMPANY, Schenectady, NY 12345 (US)
(72) Inventor: SKARBARDONIS, John, G., Charleston, SC 29423-8088 (US); SEARCY, Everett, R., Evansville, IN 47712 (US); MARTIN, Stanley, Vernon, Cynthiana, IN 47612 (US); LOEHR, Todd, M., Evansville, IN 47712 (US)
(74) Representative: Grever, Frederik
(86) International application number: PCT/US1999/020424
(87) International publication number: WO 2000/027927

(56) References cited:
- EP-A- 0 491 266
- EP-A- 0 582 383
- EP-A- 0 590 471
- EP-A- 0 656 548
- EP-A- 0 680 996
- JP-A- 26 557
- JP-A- 632 995
- JP-A- 790 167
- JP-A- 1 315 466
- JP-A- 3 126 766
- JP-A- 4 279 668
- JP-A- 4 328 148
- JP-A- 5 938 253
- JP-A- 7 234 304
- US-A- 5 237 004
- US-A- 5 364 926
- CHEMICAL ABSTRACTS, vol. 116, no. 4, 27 January 1992 (1992-01-27) Columbus, Ohio, US; abstract no. 22152, XP002126370 & JP 03 143950 A (NIPPON GE PLASTICS, LTD.) cited in the application
- CHEMICAL ABSTRACTS, vol. 122, no. 12, 20 March 1995 (1995-03-20) Columbus, Ohio, US; abstract no. 134965, XP002126371 & JP 06 220290 A (SEKISUI PLASTICS) cited in the application
- CHEMICAL ABSTRACTS, vol. 117, no. 2, 13 July 1992 (1992-07-13) Columbus, Ohio, US; abstract no. 9164, XP002126380 -& PATENT ABSTRACTS OF JAPAN vol. 16, no. 114 (C-0921), 23 March 1992 (1992-03-23) & JP 03 285958 A (DAINICHISEIKA COLOR AND CHEMICALS MFG. CO.)
- DATABASE WPI Week 198819 Derwent Publications Ltd., London, GB; AN 1988-128421 XP002126429 & JP 63 022816 A (ASAHI OLIN KK)
- Kunstoff-Kompendium, Frank, A., Biederbick, K.; Vogel Buchverlag, Würzburg, 2 Auflage, p. 301,302,317 (1988)
- ASTM D-1003-00 (July 2000)
- ASTM D-1003-95 (April 1995)
- ASTM E 167
- ASTM E 167-96

## Description

This application relates generally to translucent thermoplastic articles. Specifically, this application relates to thermoplastic articles having relatively high percent light transmission, haze less than about 95%, and relatively low percent clarity. For purposes of this application, levels of haze which may be high in an absolute sense, but are still between 70 and 95 %, will be referred to as "relatively low haze." If an observer looks through such an article at an object behind the article, the observer can see that there is a particular object a distance behind the article (relatively low haze), but the observer can not clearly see the object (low clarity).

Various efforts have been made to make translucent thermoplastic articles having unique visual appearances. For example, thermoplastic articles having very high haze (above about 95%) have been made by incorporating particles of a polymer into a polymermatrix having a different refractive index. Specifically, Japanese Patent No. 3,143,950 discloses light fixture covers made by dispersing polymer particles in a polymer matrix having a different refractive Index. Such materials have been useful for enclosures where the intent is not to let the observer see any apparatus behind the article. Very high haze, low clarity light fixture enclosures are made from this material because the emitted light is well dispersed across the entire enclosure. Also, the light bulb remains hidden behind the enclosure when it is not lit.

Typically, articles having relatively low haze also have high clarity. For example, polycarbonate compositions comprising ZnO as a light diffuser typically have clarity above 90 % when haze is near 90%. According to ASTM D 1003, haze is defined as the percentage of transmitted light that deviates from the incident beam by more than 2.5° on average. Clarity is defined as the percentage of transmitted light that deviates from the incident by more than 0, but less than 2.5° on average. Conventional materials which have relatively low haze (i.e., a smaller degree of > 2.5° scattering) also have high clarity (i.e., a smaller degree of < 2.5° scattering). This relationship holds true even when the absolute level of haze is high, but the "relatively low" haze level is less than about 95%.

For some applications, it is desirable to achieve a translucent material having relatively low haze and relatively low clarity. For example, in applications such as privacy windows, and more recently business equipment housings, it is desirable to have high light transmission, relatively low haze, and relatively low clarity so that objects can be seen behind the material, but not clearly.

There have been previous attempts to make translucent polycarbonate resin compositions by incorporating zinc oxide into polycarbonate. There are several disadvantages to compositions which incorporate zinc oxide or other inorganic light diffusing agents. Specifically, these agents tend to react with polycarbonate and other thermoplastics to cause degradation of the physical characteristics of the thermoplastic. Additionally, compositions comprising zinc oxide tend to have very high clarity at relatively low levels of haze which are still high In an absolute sense (e.g., 40% to about 98%).

### SUMMARY OF THE INVENTION

There is described herein a thermoplastic article which has a high percent light transmission, relatively low haze and low clarity article is placed in front of an object, the observer on the far side of the article will see the object, but not clearly. According to the invention, the thermoplastic article will have a percentage light transmission above 85%, a haze value less than 95%, and a clarity of above 70%, but below 95%. In a more preferred embodiment of the invention, the clarity will be below 85%.

It has been found that these limits on haze and clarity may be achieved if the size of the light diffuser spherical thermoplastic particles is carefully controlled. Specifically, when the size of the transparent thermoplastic particles is reduced below a certain point, the clarity begins to decline and the haze begins to increase. Above this critical size limit, there is little dependence of clarity and haze on particle size, and the clarity will be too high to give the desired optical effect -- a slight blurring of objects seen through the material. By carefully selecting a particle size below the critical size limit, one can obtain the desired properties of relatively low haze, and low clarity.

The article described herein comprises roughly spherical transparent thermoplastic particles dispersed in a transparent matrix thermoplastic resin. The particles and the matrix thermoplastic resin have differing refractive indices. When the size, loading and type of spherical transparent thermoplastic particles is chosen appropriately, a material will be obtained which has a relatively low clarity without sufficient haze to prevent an observerfrom discerning objects behind the article.

The article is substantially free from inorganic light diffusion agents, and thereby avoids degradation caused by such additives.

Other features, aspects and advantages of the invention will become better understood with reference to the following detailed description of some preferred embodiments of the invention, the drawings and the appended claims.

### BRIEF DESCRIPTION OF THE DRAWINGS

FIG. 1 is a plot of percent light transmission versus sample number for the six samples described in Example 1.
FIG. 2 is a plot of percent haze versus sample number for the six samples described In Example 1.
FIG. 3 Is a plot of percent clarity versus sample number for the six samples described in Example 1.
FIG. 4 is a plot of percent clarity and haze versus particle size for a polycarbonate/PMMA article as described in Example 2. (PMMA is polymethylmethacrylate).
FIG. 5 is a plot of haze versus PMMA particle size for samples having various thicknesses as described in Example 2.
FIG. 6 is a plot of clarity versus PMMA particle size for samples having various thicknesses as described in Example 2.

### DETAILED DESCRIPTION OF THE PREFERRED EMBODIMENTS

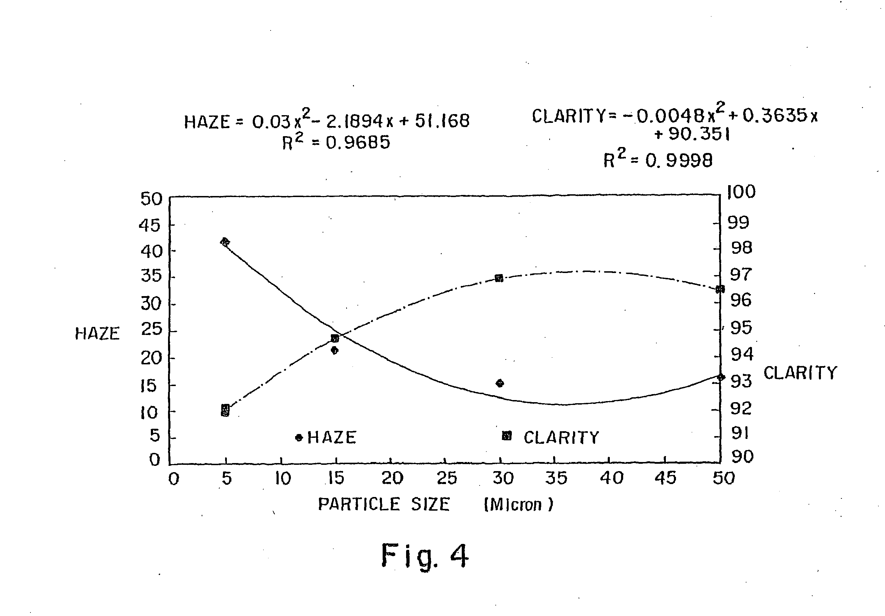

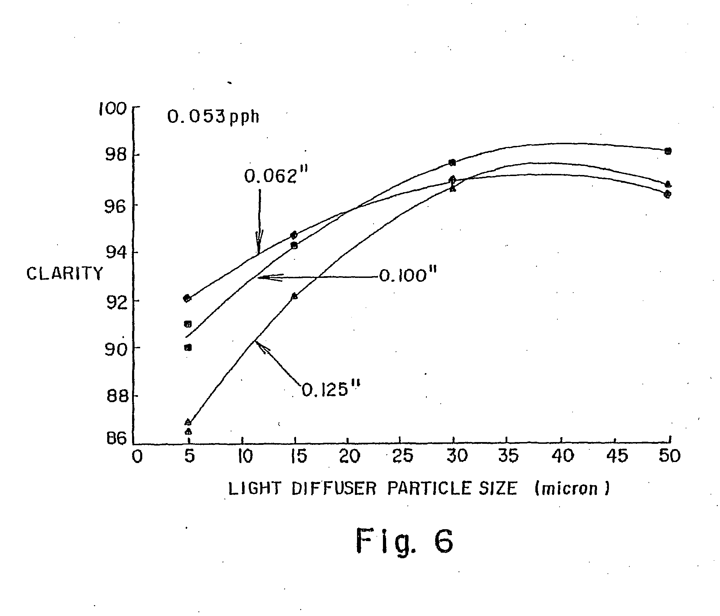

A typical thermoplastic article according to the invention comprises a matrix of transparent matrix thermoplastic resin (hereinafter "the matrix") and transparent spherical thermoplastic PMMA particles (hereinafter "spherical particles") suspended therein. Such articles have a percent light transmission above 85% a haze of less than 95%, and a clarity of greater than 70% but less than 97%. To obtain these optical characteristics the particles must be selected carefully. Specifically, they must have an average diameter small enough such that the clarity is below its maximum versus the average diameter of the spherical particles (i.e., as shown in Figures 4 and 6, the clarity remains very flat above a certain diameter threshold, but begins to taper off steeply below this point). In a preferred embodiment of the invention, the spherical PMMA particles are sufficiently small such that clarity is less than 85%. At the same time, the spherical particle size can not be made too small because the haze varies inversely with particle diameter. Preferably, the spherical particles have an average diameter large enough such that the haze is above Its minimum value versus particle size, but below 95%.

The loading of PMMA particles is preferably from 0.01 to 0.50, and more preferably 0.05 to 0.50 parts per hundred resin based on the matrix. The transparent matrix thermoplastic resin is selected from the group consisting of polycarbonate homopolymers or copolymers, polyester carbonates and polyethylene terephthalate (PET). The most preferred matrix material is an aromatic polycarbonate homopolymer based primarily on the bisphenol-A monomer. The synthesis of such materials is well known in the art. For example, U.S. Patent No. 5,364,926 describes the melt process for making polycarbonate. The interfacial and solid state process can also be used. Additionally, it is possible to use matrix materials that are not perfectly transparent, provided they are sufficiently transparent to achieve the visual effect described above.

The spherical PMMA particles have a refractive index (hereinafter "R.I.") different from that of the matrix. Preferably, the R.I. of the spherical particles differs from that of the matrix by at least 0.01. Techpolymer MBX-series crosslinked PMMA microspheres, which are available in various diameters from Nagase America (e.g., 5 -50 micron avg. diameter), are preferred. In a more preferred embodiment of the invention, the matrix thermoplastic resin is polycarbonate having an R.I. of 1.56 to 1.62, and the spherical particles are PMMA having an R.I. of 1.46 to 1.53.

In a preferred embodiment of the invention, the spherical transparent PMMA particles have an average diameter which is sufficiently small such that the clarity of the article is below its maximum value with respect to the average diameter of the spheres.

In cases where the matrix thermoplastic resin is polycarbonate, this condition is typically satisfied when the average particle diameter is less than about 30 microns (see FIG. 4). In such cases, the particle size is more preferably below 15 microns, and most preferably between 3 and 10 microns. In an alternate embodiment of the invention, there may be two or more sets of PMMA particles wherein at least one set has a particle size below 30 microns. Preferred PMMA particles for incorporation in a polycarbonate matrix have a specific gravity of about 1.10 to 1.30, and are highly crosslinked (e.g., essentially 100% crosslinked).

In a more preferred embodiment of the invention the diameter of the spherical particles is sufficiently small such that the clarity is less than 0.95 of its maximum value versus the diameter of the spherical particles. In a most preferred embodiment, the spherical particles are sufficiently such that the clarity is less than 0.93 of its maximum value versus the diameter of the particles.

PMMA spherical particles in the various sizes between 1 and 50 micron diameter are commercially available from Nagase America. Methods of making such particles are known, and are described, for example, in Japanese Published Patent Application No. JP 6220290.

The thermoplastic matrix may optionally further contain an optical brightening agent, additional pigments and/or a fluorescent dye. Adding an optical brightening agent helps produce a brighter color for the article. Suitable optical brightening agents Include aromatic stilbene derivatives, aromatic benzoxazole derivatives, or aromatic stilbene benzoxazole derivatives. Among these optical brightening agents, Uvltex OB from Ciba Specialty Chemicals [2,5-bls(5'-tert-butyl-2-benzoxazolyl)thlophene] is preferred. An optical brightening agent may be present In an amount of from 0.001 to 0.05 parts per 100 parts of the transparent matrix thermoplastic resin.

Adding a fluorescent dyestuff generates striking visual effects for the article. Suitable fluorescent dyestuffs include Permanent Pink R (Color Index Pigment Red 181, from Clariant Corporation), Hostasol Red 5B (Color Index #73300, CAS # 522-75-8, from Clariant Corporation) and Macrolex Fluorescent Yellow 10GN (Color Index Solvent Yellow 160:1, from Bayer Corporation). Among these, Permanent Pink R is preferred.

Any type of pigment that is well known for inclusion in thermoplastic materials can also be added to the thermoplastic matrix. Preferred pigments include titanium dioxide, zinc sulfide, carbon black, cobalt chromate, cobalt titanate, cadmium sulfides, iron oxide, sodium aluminum sulfosilicate, sodium sulfosilicate, chrome antimony titanium rutile, nickel antimony titanium rutile, zinc oxide, and polytetrafluoroethylene. Preferably the pigment surface is passivated, for example with a methyl-hydrogen silicone fluid.

It may also be advantageous to include various chemicals to prevent degradation of the thermoplastic matrix due to exposure to UV light (hereinafter "UV stabilizers"). Suitable UV stabilizers include substituted benzotriazoles, or triazines, or tetraalkylpiperidines. The UV stabilizers may be mixed into the thermoplastic matrix, or they can be included only In a "hardcoat" transparent protective layer which is applied over the viewing surface.

The resin composition according to the Invention may further contain other resins and additives such as reInforcing agents, fillers, impact modiflers, heat resisting agents, antioxidants, anti-weathering agents, stabilizers, mold release agents, lubricants, nucleating agents, plasticizers, flame retardants, flow-improving agents and anti-statics. These additives may be introduced in a mixing or molding process, provided the properties of the composition are not damaged.

The reinforcing fillers may be metallic fillers such as fine powder aluminum, iron, nickel, or metal oxides. Non-metallic fillers include carbon filaments, silicates such as mica, aluminum silicate or day, talc and asbestos, titanium oxide, wollastonite, novaculite, potassium titanate, titanate whiskers, glass fillers and polymer fibers or combinations thereof. Glass fillers useful for reinforcement are not particularly limited in theirtypes orshapes and may be, for instance, glass fibers, milled glass, glass flakes and hollow or solid glass beads. Glass fillers may be subjected to surface treatment with coupling agents such as silane or titanate-type agents to enhance their adhesion with resin, or coated with inorganic oxides to provide some surface color to the filler.

Reinforcing fillers are preferably used in an amount sufficient to yield the reinforcing effect, usually 1 to 60% by weight, preferably less than 10% by weight, based on the total weight of the composition. Glass fibers, or a combination of glass fibers with talc, mica or aluminum silicate are preferred reinforcing agents. These fibers are preferably about 3.05 µm to 19.05 µm (0.00012 to 0.00075 inches) long. The amount of filler must be less than that which would make the material opaque.

In an exemplary embodiment of the invention, a polycarbonate derived from brominated bisphenol is added as a flame retardant. When such brominated polymers are added, inorganic or organic antimony compounds may further be blended in the composition to synergistically enhance flame retardance introduced by such polycarbonate. Suitable inorganic antimony compounds are antimony oxide, antimony phosphate, KSb(OH)₆, NH₄SbF₆ and Sb₂S₃. A wide variety of organic antimony compounds may also be used, such as antimonic esters of organic acids, cyclic alkyl antimonite esters and aryl antimonic add compounds. Examples of typical organic antimony compounds are potassium antimony tartrate, antimony salt of caproic acid, Sb(OCH₂CH₃)₃, Sb[OCH(CH₃)CH₂CH₃]₃, antimony polymethylene glycorate and triphenyl antimony. A preferred antimony compound is antimony oxide.

Phosphites (e.g., aromatic phosphite thermal stabilizers), metal salts of phosphoric and phosphorous acid, hindered phenol antioxidants, and aromatic lactone radical scavengers may also be added as stabilizers or antioxidants.

Suitable antistatic agents include, but are not limited to, phosphonium salts, polyalkylene glycols, sulfonium salts and alkyl and aryl ammonium salts.

Suitable mold release agents include, but are not limited to, pentaerythritol tetracarboxylate, glycerol monocarboxylates, glycerol tricarboxylates, polyolefins, alkyl waxes and amides. The mold release agents may be used in an amount of from 0.05 to 0.5 parts per 100 parts of the transparent matrix thermoplastic resin.

To prepare the resin composition of the invention, the components may be mixed by any known methods. Typically, there are two distinct mixing steps: a premixing step and a melt mixing step. In the premixing step, the dry ingredients are mixed together. This premixing step is typically performed using a tumbler mixer or a ribbon blender. However, if desired, the premix may be manufactured using a high shear mixer such as a Henschel mixer or similar high intensity device. The premixing step must be followed by a melt mixing step where the premix is melted and mixed again as a melt Alternatively, it is possible to skip the premixing step, and simply add the raw materials directly into the feed section of a melt mixing device via separate feed systems. In the melt mixing step, the ingredients are typically melt kneaded In a single screw or twin screw extruder, a Banbury mixer, a two roll mill, or similar device.

The composition according to present invention may then be formed into articles by any known method such as extrusion or injection molding. For example, the composition may be may be used to prepare film sheet or complex shapes via any conventional technique.

The thermoplastic articles according to the present invention are useful for a variety of different purposes. As some specific, non-limiting examples, they may be used for business equipment housings such as computer, monitor or printer housings, communications equipment housings such as cellular phone enclosures, data storage device housings, appliances, or automobile parts such as instrument panel components or in a lens for a head lamp. The article can be any size or shape. Thermoplastic articles according to the invention are particularly preferred for applications where low clarity and high percent light transmission are design objectives.

The present invention is further illustrated by way of the following examples. These examples are intended to be representative of the invention and are not in any way intended to limit its scope.

### Example 1

Six different samples were prepared to show the effect of spherical partial size versus percent light transmission, haze and clarity. Specifically, formulations were prepared as described below in Table 1. All of the spherical particles were PMMA and the matrix was LEXAN® polycarbonate resin (a homopolymer based on bisphenol-A).

**TABLE I**

| | | |
|---|---|---|
| Sample # | Parts Spherical Particles* | Average Diameter Particles (microns) |
| 1 | 0.53 | 5 |
| 2 | 0.53 | 15 |
| 3 | 0.53 | 30 |
| 4 | 0.53 | 50 |
| 5 | 0.53 | 5^{†} |
| 6 | 0.2650.265 | 550 |

| | | |
|---|---|---|
| * Based on parts per 100 part matrix resin. ^{†} This sample has 4x as much crosslinking agent (ethylene glycol dimethacrylate) in the PMMA as sample 1. | | |

Each of the above six samples further comprises 0.06 parts per hundred (pph) of 2,4-di-tert-butylphenylphosphite (3:1); 0.0036 pph sodium aluminum sulfosilicate (ultramarine pigment); 0.05 pph diphenyl isodecyl phosphite (stabilizer); 0.0016 pph silicone hydride-coated TiO₂ (pigment); and 0.0016 pph cobalt aluminum oxide (pigment).

All of these samples were prepared by blending together the above-described ingredients and extruding them in a single or twin screw extruder with the zone temperatures set to between 249°C and 288°C (4B0 and 550 degrees F). The pellets produced from this operation were then molded into color chips of various thickness in a Boy 15S thermoplastic molding machine set to 304°C (580 degrees F) in the barrel zone, and B2°C (180 degrees F)in the mold. The screw in the molding machine was operated at 200 rpm. Two sets of sample chips were molded: a first set having a uniform thickness of 2.54 mm (0.100 inches), and a second set of two-step chips having step thicknesses of 1.57 mm and 3.18 mm (0.062, and 0.125 inches), respectively.

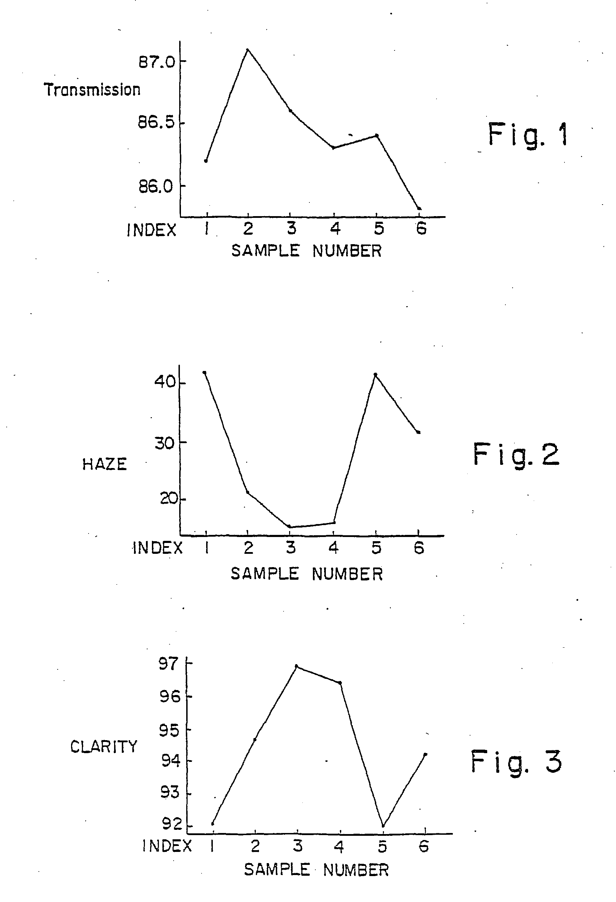

Figures 1 - 3 show the results obtained upon measuring percent light transmission, haze and clarity, respectively, for these six samples. Figure 1 seems to show that transmission falls off slightly with increasing PMMA spherical particle size, but the effect is very small and could be within experimental error. In any case, the percent light transmission for these samples was relatively high (about 86 - 87).

Figure 2 shows that haze decreases with increasing particle size to a minimum value at about 30 microns (sample #3). There is no significant further decrease from 30 microns to 50 micron (sample #4). The bimodal particle size distribution of sample 6 gives an additive effect.

Figure 3 shows that the clarity Increases with Increasing particle size. up to a maximum at a particle size of about 30 microns. There is no further Increase in clarity when progressing from 30 microns to 50 micron particles. Again, sample 6 shows an additive effect.

Based on samples 5 and 1, there does not seem to be a strong dependence of any of the optical properties on the degree of PMMA crosslinking.

### Example 2

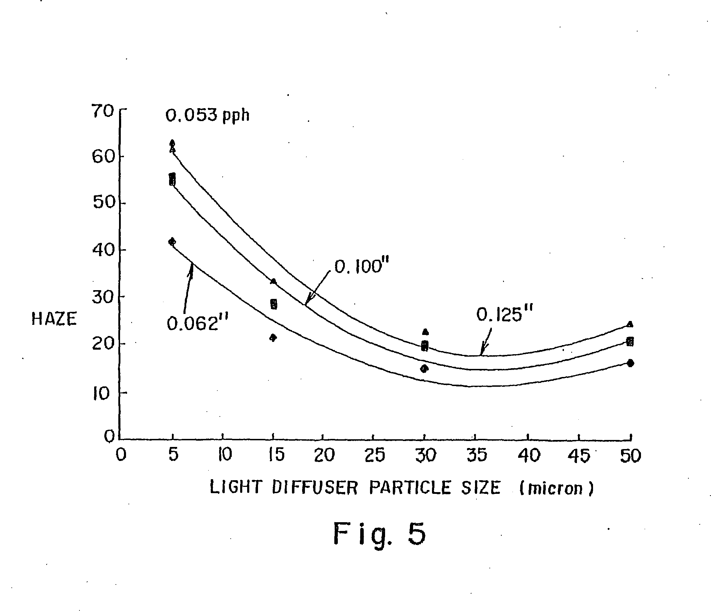

As described above, a set of chips having three steps of different thicknesses was also prepared for samples 1-6. Figures 4 - 6, which represent combined measurements taken from both the first and second set of chips, confirm when the particle size drops below 30 microns, the clarity falls and the haze increases. Obviously, this "critical" size will vary with the chosen particles and matrix material. Figures 5 and 6 also confirm that this same trend is observed regardless of the thickness of the tested sample,

It should be remembered that the above examples merely show representative compositions according to the invention, and should not be used to limit the claimed invention in any way.

## Claims

1. A translucent thermoplastic article having the characteristic that if said article is placed in front of an object, an observer on the other side of said article will see said object, which article comprises a transparent matrix thermoplastic resin, selected from the group consisting of polycarbonate homopolymers or copolymers, polyester carbonates, and polyethylene terephthalate and suspended spherical transparent PMMA particles having a refractive index different from that of the matrix thermoplastic resin, wherein the article has a percent light transmission above 85%, a haze of less than 95 % and a clarity of greater than 70% but below 97 %; wherein haze is the percentage of transmitted light that deviates from the incident beam by more than 2.5° on average and clarity is the percentage of transmitted light that deviates from the incident by more than o but less than 2.5° on average wherein the article is substantially free of any inorganic light diffusing agent.

2. the thermoplastic article according to claim 1, wherein the transparent matrix thermoplastic resin is polycarbonate.

3. The thermoplastic article according to claim 1, wherein the clarity is less than 85%.

4. The thermoplastic article according to claim 1, which comprises from 0.01 to 0.50 parts of the PMMA spherical particles per 100 parts of the transparent matrix thermoplastic resin.

5. The thermoplastic article according to claim 4, which comprises from 0.05 to 0.50 weight parts of the particles per 100 parts of the transparent matrix thermoplastic resin.

6. The thermoplastic article according to claim 1, wherein the PMMA spherical particles have an average diameter of less than 30 microns.

7. The thermoplastic article according to claim 6, wherein the PMMA spherical particles have an average diameter of less than 15 microns.

8. The thermoplastic article according to claim 7, wherein the transparent thermoplastic particles comprise a plurality of sets of PMMA spherical particles, wherein each set has a different average diameter and at least one set has an average diameter of less than 30 microns.

9. The thermoplastic article according to claim 7, wherein the PMMA spherical particles have an average diameter of more than 3 and less than 10 microns.

10. The thermoplastic article according to claim 1, which further comprises a pigment.

11. The thermoplastic article according to claim 10, wherein the pigment is selected from the group consisting of titanium dioxide, zinc sulfide, carbon black cobalt chromate, cobalt titanate, cadmium sulfides, iron oxide, sodium aluminum sulfosilicate, sodium sulfosilicate, chrome antimony titanium rutile, nickel antimony titanium rutite, zinc oxide, and polytetrafluoroethylene.

12. The thermoplastic article according to claim 11, wherein the pigment surface is passivated.

13. The thermoplastic article according to claim 12, wherein the pigment is passivated with a methyl-hydrogen silicone fluid.

14. The thermoplastic article according to claim 13, wherein the pigment is TiO2.

15. The thermoplastic article according to claim 1, wherein the refractive index of the polycarbonate is from 1.56 to 1.62.

16. The thermoplastic article according to claim 15, wherein the refractive index of the PMMA is from 1.46 to 11.53.

17. The thermoplastic article according to claim 16, wherein the PMMA particles have a specific gravity of 1.10 to 1.30.

18. The thermoplastic article according to claim 17, wherein the PMMA is essentially 100% crosslinked.

19. The thermoplastic article according to claim 1, which further comprises 0.05 to 0.5 parts mold release agent per 100 parts of the transparent matrix thermoplastic resin.

20. The thermoplastic article according to claim 19, wherein the mold release agent is selected from the group consisting of pontacrythritol tetracarboxylates, glycerol monocarboxylates, glycerol tricarboxylates, polyolefins, alkyl waxes and amides.

21. The thermoplastic article according to claim 1, which further comprises 0.001 to 0.05 parts of an optical brightening agent per 100 parts of the transparent matrix thermoplastic resin.

22. The thermoplastic article according to claim 21, wherein the optical brightener is selected front the group consisting of aromatic stilbene derivatives, aromatic benzoxazole derivatives or aromatic stilbene benzoxazole derivatives.

23. The thermoplastic article according to claim 1, wherein the article is a business equipment housing.

24. A translucent thermoplastic article according to claim 1, wherein the average diameter of the spherical PMMA particles is sufficiently small such that the clarity is below its maximum value versus, average diameter of the spheres, wherein the article is substantialy free of any inorganic light diffusing agent.

25. The thermoplastic article according to claim 24, wherein the haze is above its minimum value versus diameter of the spheres.

26. The thermoplastic article according to claim 24, wherein the average diameter of the spherical particles is sufficiently small such that the clarity is less than 0.95 of its maximum value versus the diameter of the spheres.

27. The thermoplastic article according to claim 26, wherein the average diameter of the spherical particles is sufficlaritly small such that the clarity is less than 0.93 of its maximum value versus the diameter of the spheres.

28. The thermoplastic article according to claim 24, wherein the article is a business equipment housing.

29. A translucent thermoplastic article according to claim 1 wherein the size, type and loading of the spherical transparent PMMA particles is selected such that the haze is below 95% and tho clarity is less than 85%.

## Patentansprüche

1. Durchscheinender thermoplastischer Gegenstand mit der Charakteristik, dass bei Anordnung dieses Gegenstandes vor einem Objekt ein Beobachter auf der anderen Seite des Gegenstandes das Objekt sieht, wobei der Gegenstand ein transparentes thermoplastisches Matrixharz, ausgewählt aus der Gruppe bestehend aus Polycarbonat-Homopolymeren oder -Copolymeren, Polyestercarbonaten und Polyethylenterephthalat, und suspendierte kugelförmige transparente PMMA-Teilchen mit einem Brechungsindex umfasst, der sich von dem des thermoplastischen Matrixharzes unterscheidet, wobei der Gegenstand eine prozentuale Lichtdurchlässigkeit oberhalb 85%, eine Trübung von weniger als 95% und eine Klarheit von mehr als 70% und weniger als 97% aufweist, worin Trübung der Prozentsatz des durchgelassenen Lichtes ist, der im Mittel um mehr als 2,5° vom einfallenden Strahl abweicht und Klarheit der Prozentsatz des durchgelassenen Lichtes ist, der im Mittel um mehr als 0 aber weniger als 2,5° vom einfallenden Strahl abweicht, wobei der Gegenstand im Wesentlichen frei ist von einem anorganischen Lichtdiffusionsmittel.

2. Thermoplastischer Gegenstand nach Anspruch 1, worin das transparente thermoplastische Matrixharz Polycarbonat ist.

3. Thermoplastischer Gegenstand nach Anspruch 1, worin die Klarheit geringer als 85% ist.

4. Thermoplastischer Gegenstand nach Anspruch 1, umfassend von 0,01 bis 0,50 Teile der kugelförmigen PMMA-Teilchen auf 100 Teile des transparenten thermoplastischen Matrixharzes.

5. Thermoplastischer Gegenstand nach Anspruch 4, umfassend von 0,05 bis 0,50 Gewichtsteile der Teilchen auf 100 Teile des transparenten thermoplastischen Matrixharzes.

6. Thermoplastischer Gegenstand nach Anspruch 1, worin die kugelförmigen PMMA-Teilchen einen mittleren Durchmesser von weniger als 30 µm aufweisen.

7. Thermoplastischer Gegenstand nach Anspruch 6, worin die kugelförmigen PMMA-Teilchen einen mittleren Durchmesser von weniger als 15 µm aufweisen.

8. Thermoplastischer Gegenstand nach Anspruch 7, worin die transparenten thermoplastischen Teilchen eine Vielzahl von Sätzen von kugelförmigen PMMA-Teilchen umfassen, worin jeder Satz einen anderen mittleren Durchmesser aufweist und mindestens ein Satz einen mittleren Durchmesser von weniger als 30 µm aufweist.

9. Thermoplastischer Gegenstand nach Anspruch 7, worin die kugelförmigen PMMA-Teilchen einen mittleren Durchmesser von mehr als 3 und weniger als 10 µm aufweisen.

10. Thermoplastischer Gegenstand nach Anspruch 1, der weiter ein Pigment umfasst.

11. Thermoplastischer Gegenstand nach Anspruch 10, worin das Pigment ausgewählt ist aus der Gruppe bestehend aus Titandioxid, Zinksulfid, Ruß, Cobaltchromat, Cobalttitanat, Cadmiumsulfiden, Eisenoxid, Natriumaluminiumsulfosilicat, Natriumsulfosilicat, Chrom-Antimon-Titan-Rutil, Nickel-Antimon-Titan-Rutil, Zinkoxid und Polytetrafluorethylen.

12. Thermoplastischer Gegenstand nach Anspruch 11, worin die Pigment-Oberfläche passiviert ist.

13. Thermoplastischer Gegenstand nach Anspruch 12, worin das Pigment mit einer Methylhydrogensilicon-Flüssigkeit passiviert ist.

14. Thermoplastischer Gegenstand nach Anspruch 13, worin das Pigment TiO₂ ist.

15. Thermoplastischer Gegenstand nach Anspruch 1, worin der Brechungsindex des Polycarbonats von 1,56 bis 1,62 beträgt.

16. Thermoplastischer Gegenstand nach Anspruch 15, worin der Brechungsindex des PMMA von 1,46 bis 1,53 beträgt.

17. Thermoplastischer Gegenstand nach Anspruch 16, worin die PMMA-Teilchen ein spezifisches Gewicht von 1,10 bis 1,30 aufweisen.

18. Thermoplastischer Gegenstand nach Anspruch 17, worin das PMMA im Wesentlichen zu 100% vernetzt ist.

19. Thermoplastischer Gegenstand nach Anspruch 1, weiter umfassend 0,05 bis 0,5 Teile Entformungsmittel auf 100 Teile des transparenten thermoplastischen Matrixharzes.

20. Thermoplastischer Gegenstand nach Anspruch 19, worin das Entformungsmittel ausgewählt ist aus der Gruppe bestehend aus Pentaerythrittetracarboxylaten, Glycerinmonocarboxylaten, Glycerintricarboxylaten, Polyolefinen, Alkylwachsen und Amiden.

21. Thermoplastischer Gegenstand nach Anspruch 1, weiter umfassend 0,001 bis 0,05 eines optischen Aufhellers auf 100 Teile des transparenten thermoplastischen Matrixharzes.

22. Thermoplastischer Gegenstand nach Anspruch 21, worin der optische Aufheller ausgewählt ist aus der Gruppe bestehend aus aromatischen Stilbenderivaten, aromatischen Benzoxazolderivaten oder aromatischen Stilben-Benzoxazol-Derivaten.

23. Thermoplastischer Gegenstand nach Anspruch 1, worin der Gegenstand ein Büroausrüstungs-Gehäuse ist.

24. Durchscheinender thermoplastischer Gegenstand nach Anspruch 1, worin der mittlere Durchmesser der sphärischen PMMA-Teilchen genügend gering ist, sodass die Klarheit in Abhängigkeit vom mittleren Durchmesser der Kügelchen unter ihrem Maximalwert liegt, wobei der Gegenstand im Wesentlichen frei ist von irgendeinem anorganischen Lichtdiffusionsmittel.

25. Thermoplastischer Gegenstand nach Anspruch 24, worin die Trübung in Abhängigkeit vom Durchmesser der Kügelchen oberhalb ihres Minimalwertes liegt.

26. Thermoplastischer Gegenstand nach Anspruch 24, worin der mittlere Durchmesser der kugelförmigen Teilchen genügend gering ist, sodass die Klarheit geringer als 0,95 ihres Maximalwertes in Abhängigkeit vom Durchmesser der Kügelchen ist.

27. Thermoplastischer Gegenstand nach Anspruch 26, worin der mittlere Durchmesser der kugelförmigen Teilchen genügend gering ist, sodass die Klarheit geringer als 0,93 ihres Maximalwertes in Abhängigkeit vom Durchmesser der Kügelchen ist.

28. Thermoplastischer Gegenstand nach Anspruch 24, worin der Gegenstand ein Büroausrüstungs-Gehäuse ist.

29. Durchscheinender thermoplastischer Gegenstand nach Anspruch 1, worein die Größe, Art und Menge der sphärischen transparenten PMMA-Teilchen derart ausgewählt ist, dass die Trübung unterhalb von 95% und die Klarheit geringer als 85% ist.

## Revendications

1. Article thermoplastique translucide, présentant la caractéristique que, si ledit article est placé devant un objet, un observateur placé de l'autre côté dudit article verra ledit objet, lequel article comprend une matrice de résine thermoplastique transparente, choisie parmi les polycarbonates homopolymères ou copolymères, les polyester-carbonates et le poly(éthylène téréphtalate), et des particules sphériques transparentes de poly(méthacrylate de méthyle) (PMMA) en suspension, dont l'indice de réfraction est différent de celui de la matrice de résine thermoplastique, et lequel article présente un pourcentage de transmission de la lumière supérieur à 85 %, un voile inférieur à 95 % et une clarté supérieure à 70 %, mais inférieure à 97 %, le voile étant le pourcentage de lumière transmise qui s'écarte du rayon incident de plus de 2,5° en moyenne et la clarté étant le pourcentage de lumière transmise qui s'écarte du rayon incident d'un angle supérieur à 0°, mais inférieur à 2,5° en moyenne, ledit article ne contenant pratiquement aucun agent minéral diffusant la lumière.

2. Article thermoplastique selon la revendication 1, dont la matrice de résine thermoplastique transparente est du polycarbonate.

3. Article thermoplastique selon la revendication 1, dont la clarté est inférieure à 85 %.

4. Article thermoplastique selon la revendication 1, qui renferme 0,01 à 0,50 partie de particules sphériques de PMMA pour 100 parties de matrice de résine thermoplastique transparente.

5. Article thermoplastique selon la revendication 4, qui renferme 0,05 à 0,50 partie en poids de particules, pour 100 parties de matrice de résine thermoplastique transparente.

6. Article thermoplastique selon la revendication 1, dont les particules sphériques de PMMA ont un diamètre moyen inférieur à 30 micromètres.

7. Article thermoplastique selon la revendication 6, dont les particules sphériques de PMMA ont un diamètre moyen inférieur à 15 micromètres.

8. Article thermoplastique selon la revendication 7, dont les particules thermoplastiques transparentes comprennent plusieurs groupes de particules sphériques de PMMA, chaque groupe ayant un diamètre moyen différent et au moins un groupe ayant un diamètre moyen inférieur à 30 micromètres.

9. Article thermoplastique selon la revendication 7, dont les particules sphériques de PMMA ont un diamètre moyen supérieur à 3 micromètres et inférieur à 10 micromètres.

10. Article thermoplastique selon la revendication 1, qui renferme en outre un pigment.

11. Article thermoplastique selon la revendication 10, dont le pigment est choisi parmi le dioxyde de titane, le sulfure de zinc, le noir de carbone, le chromate de cobalt, le titanate de cobalt, le sulfure de cadmium, l'oxyde de fer, le sulfosilicate de sodium et d'aluminium, le sulfosilicate de sodium, le rutile de titane-antimoine-chrome, le rutile de titane-antimoine-nickel, l'oxyde de zinc et le polytétrafluoroéthylène.

12. Article thermoplastique selon la revendication 11, dont le pigment est passivé en surface.

13. Article thermoplastique selon la revendication 12, dont le pigment est passivé avec une méthyl-hydrogénosilicone liquide.

14. Article thermoplastique selon la revendication 13, dont le pigment est du TiO₂.

15. Article thermoplastique selon la revendication 1, dont le polycarbonate a un indice de réfraction de 1,56 à 1,62.

16. Article thermoplastique selon la revendication 15, dont le PMMA a un indice de réfraction de 1,46 à 1.,53.

17. Article thermoplastique selon la revendication 16, dont les particules de PMMA ont une densité de 1,10 à 1,30.

18. Article thermoplastique selon la revendication 17, dont le PMMA est réticulé pratiquement à 100 %.

19. Article thermoplastique selon la revendication 1, qui comprend en outre 0,05 à 0,5 partie d'agent de démoulage pour 100 parties de matrice de résine thermoplastique transparente.

20. Article thermoplastique selon la revendication 19, dont l'agent de démoulage est choisi parmi les tétracarboxylates de pentaérythritol, les monocarboxylates de glycérol, les tricarboxylates de glycérol, les polyoléfines, les cires d'alkyle et les amides.

21. Article thermoplastique selon la revendication 1, qui comprend en outre 0,001 à 0,05 partie d'un azurant optique pour 100 parties de matrice de résine thermoplastique transparente.

22. Article thermoplastique selon la revendication 21, dont l'azu-rant optique est choisi parmi les dérivés aromatiques du stilbène, les déri-vés aromatiques du benzoxazole et les dérivés aromatiques de stilbène et benzoxazole.

23. Article thermoplastique selon la revendication 1, qui est un logement d'équipement de bureau.

24. Article thermoplastique translucide selon la revendication 1, pour lequel les particules sphériques de PMMA ont un diamètre moyen suffisamment faible pour que la clarté soit inférieure à la valeur maximale qu'elle atteint en fonction du diamètre moyen des sphères, l'article ne contenant pratiquement aucun agent minéral diffusant la lumière.

25. Article thermoplastique selon la revendication 24, dont le voile est supérieur à la valeur minimale qu'il atteint en fonction du diamètre des sphères.

26. Article thermoplastique selon la revendication 24, pour lequel le diamètre moyen des particules sphériques est suffisamment faible pour que la clarté soit inférieure à 95 % de la valeur maximale qu'elle atteint en fonction du diamètre des sphères.

27. Article thermoplastique selon la revendication 26, pour lequel le diamètre moyen des particules sphériques est suffisamment faible pour que la clarté soit inférieure à 93 % de la valeur maximale qu'elle atteint en fonction du diamètre des sphères.

28. Article thermoplastique selon la revendication 24, qui est un logement d'équipement de bureau.

29. Article thermoplastique translucide selon la revendication 1, pour lequel la taille, le type et la proportion des particules sphériques transparentes de PMMA sont choisis de manière que le voile soit inférieur à 95 % et que la clarté soit inférieure à 85 %.
